# EUROPÄISCHE PATENTSCHRIFT

(11) **EP 3 175 255 B1**
(45) Veröffentlichungstag und Bekanntmachung des Hinweises auf die Patenterteilung: **13.12.2023**
(21) Anmeldenummer: 15741736.1
(22) Anmeldetag: 28.07.2015
(51) Int. Cl.: G01S 7/40, G01S 13/91, G08G 1/01, G08G 3/00

(54) **VERFAHREN ZUM BESTIMMEN EINER POSITION UND/ODER AUSRICHTUNG EINES SENSORS**
METHOD FOR DETERMINING A POSITION AND/OR ORIENTATION OF A SENSOR
PROCÉDÉ DE DÉTERMINATION D'UNE POSITION ET/OU D'UNE ORIENTATION D'UN CAPTEUR

(30) Priorität: 28.07.2014 DE 102014010937
(43) Veröffentlichungstag der Anmeldung: 07.06.2017
(73) Patentinhaber: S.M.S. Smart Microwave Sensors GmbH, 38108 Braunschweig (DE)
(72) Erfinder: SCHOLZ, Alexander, 38104 Braunschweig (DE); MENDE, Ralph, 38106 Braunschweig (DE)
(74) Vertreter: Gramm, Lins & Partner Patent- und Rechtsanwälte PartGmbB
(86) Internationale Anmeldenummer: PCT/EP2015/001548
(87) Internationale Veröffentlichungsnummer: WO 2016/015857

(56) Entgegenhaltungen:
- KR-A- 20100 096 519
- JOHN LIESWYN ET AL: "AUTOMATIC CYCLE COUNTING PROGRAMME DEVELOPMENT IN HAMILTON", IPENZ TRANSPORTATION GROUP CONFERENCE AUCKLAND, 1. März 2011 (2011-03-01), XP055219686, http://www.hardingconsultants.co.nz/ipenz2 011/downloads/Lieswyn__John.pdf
- MEYSAM ARGANY ET AL: "A GIS Based Wireless Sensor Network Coverage Estimation and Optimization: A Voronoi Approach", 1. Januar 2011 (2011-01-01), TRANSACTIONS ON COMPUTATIONAL SCIENCE XIV, SPRINGER BERLIN HEIDELBERG, BERLIN, HEIDELBERG, PAGE(S) 151 - 172, XP019169189, ISBN: 978-3-642-25248-8 Abschnitte 2, 3, 5; Abbildungen 13-18
- JACEK LUBCZONEK ET AL: "Aspects of spatial planning of radar sensor network for inland waterways surveillance", RADAR CONFERENCE, 2009. EURAD 2009. EUROPEAN, IEEE, PISCATAWAY, NJ, USA, 30. September 2009 (2009-09-30), Seiten 501-504, XP031558267, ISBN: 978-1-4244-4747-3
- CAITI A ET AL: "GIS-Based Performance Prediction and Evaluation of Civilian Harbour Protection Systems", OCEANS 2007 - EUROPE, IEEE, PI, 1. Juni 2007 (2007-06-01), Seiten 1-6, XP031134302, ISBN: 978-1-4244-0634-0

## Beschreibung

Die Erfindung betrifft ein Verfahren zum Bestimmen einer Soll-Position und/oder einer Soll-Ausrichtung wenigstens eines Sensors zur Überwachung des Verkehrs an einem Verkehrsweg.

Derartige Sensoren sind heute aus dem Stand der Technik seit langem bekannt und werden beispielsweise zur Verkehrsüberwachung an viel befahrenen Verkehrswegen, beispielsweise Kreuzungen, verwendet. Prinzipiell können die Sensoren aber auch zur Überwachung von Schifffahrtswegen, beispielsweise Kanälen oder Schleusen oder zur Überwachung von Schienenverkehrswegen eingesetzt werden. Üblicherweise wird durch eine Sendeeinrichtung des Sensors eine Sendestrahlung, die beispielsweise Radarstrahlung sein kann, ausgesandt. Von Verkehrsteilnehmern, die sich auf dem überwachten Teil des Verkehrsweges befinden, wird zumindest ein Teil dieser ausgesandten Sendestrahlung reflektiert und trifft dann auf eine Empfangseinrichtung des Sensors. Dadurch kann ein Teil der reflektierten Sendestrahlung empfangen werden, so dass auf die Position und die Geschwindigkeit des Verkehrsteilnehmers, von dem die ausgesandte Sendestrahlung reflektiert wurde, geschlossen werden kann.

Um beispielsweise Straßenkreuzungen mit gegebenenfalls mehreren Fahrspuren für jede Fahrtrichtung in optimaler Weise überwachen zu können, sind in vielen Fällen mehrere dieser herkömmlichen Sensoren nötig. Um möglichst wenige verwenden zu müssen und auch mit beispielsweise mit nur einem Sensor den zu überwachenden Teil des Verkehrsweges in möglichst optimaler Weise abdecken zu können, werden die optimalen Soll-Positionen und Soll-Ausrichtungen dieser Sensoren beispielsweise durch ein dreidimensionales Modell des zu überwachenden Verkehrsweges ermittelt.

Aus "Automatic Cycle Counting Programme Development in Hamilton", IPENZ Transportation Group Conference Auckland, John Lieswyn et al., 1. März 2011 ist ein Verfahren zur Bestimmung der optimalen Positionierung von Sensoren zum automatischen Zählen von Fahrradfahrern bekannt. Hierbei werden anhand von Parametern wie beispielsweise bereits vorhandenen Daten zum Radfahraufkommen an bestimmten Orten, dem Zustand der Radwege an bestimmten Orten, oder dem Vorhandensein bestimmter Einrichtungen (wie Schulen etc.) strategisch günstige Positionen für entsprechende Sensoren ermittelt.

Aus "A GIS Based Wireless Sensor Network Coverage Estimation and Optimization: A Voronoi Approach", Meysam Argany et al., 1. Januar 2011, Trans on Comput Sci XIV: S. 151-172 ist ein Verfahren zur Bestimmung der optimalen Positionierung von Geosensoren mittels einer Simulation anhand von Daten eines geographical information systems (GIS) und eines Voronoi-Diagramms bekannt.

Aus "Aspects of spatial planning of radar sensor network for inland waterways surveillance" Jaczek Lubczonek et al., European Radar Conference EURAD 2009, 30. September 2009: S.501-504 ist ebenfalls eine Simulation bekannt, die zur Bestimmung der optimalen Positionierung von insbesondere Radarsensoren an Flüssen bekannt. Hierbei wird anhand von Daten aus einem GIS und anhand dieser Daten gewonnener Sichtbarkeitsanalysen simulierter Radarsensoren deren optimale Positionierung bestimmt.

Aus "GIS-Based Performance Predicition and Evaluation of Civilian Harbour Protection Systems", Caiti et al., Oceans 2007 Europe, 1. Juni 2007: S.1-6 ist ein Simulationsverfahren bekannt, mittels welchem die Bestimmung optimaler Positionen von Überwachungssensoren für ein Hafengebiet durchgeführt werden kann.

Die Sensoren sind heute in der Lage, den Verkehr an dem Verkehrsweg auf vielfältige Weise zu überwachen. So kann beispielsweise die Anzahl und Fahrtrichtung der ermittelten Fahrzeuge und natürlich deren Geschwindigkeit für statistische Zwecke festgehalten werden. Sofern die Anzahl und der Verlauf der Fahrspuren sowie die Hauptfahrtrichtung entlang dieser Fahrspur bekannt ist, können auch beispielsweise Geisterfahrer ermittelt werden. Dafür benötigt der Sensor jedoch Zugriff auf Daten über den von ihm zu überwachenden Verkehrsweg wie beispielsweise Verlauf, Breite und Anzahl von Fahrspuren sowie die Hauptfahrtrichtungen entlang dieser Fahrspuren. Zudem benötigt er Informationen über die Position des Sensors und die Ausrichtung relativ zu den Fahrspuren. All diese Informationen werden momentan von Hand in einem Datenspeicher des Sensors hinterlegt. Dies geschieht beispielsweise, indem ein Luftbild einer Kreuzung oder eines Teils des zu überwachenden Verkehrsweges verwendet wird, um von Hand beispielsweise die Begrenzungslinien der zu erkennenden Fahrspuren nachzuziehen und so Position und Anzahl der Fahrspuren im Datenspeicher des Sensors zu hinterlegen. Dabei ergibt sich jedoch die Schwierigkeit, dass beispielsweise Luftbilder oftmals verzerrt sind, da sie nicht einer 100 % vertikalen Ansicht entsprechen. Zudem sind die Informationen über die Fahrspuren im Sensor zu hinterlegen, damit dieser Fahrzeuge, die er detektiert, einer oder mehrerer der Fahrspuren zuordnen kann. Dieses ist jedoch nur möglich, wenn in dem Datenspeicher des Sensors Informationen darüber hinterlegt wird, an welcher Soll-Position und in welcher Soll-Ausrichtung sich der Sensor relativ zu den Fahrspuren befindet. Dies ist oftmals erst bei einer Begehung des zu überwachenden Verkehrsweges ermittelbar.

Der Erfindung liegt daher die Aufgabe zugrunde, ein Verfahren zum Bestimmen einer Soll-Position und/oder einer Soll-Ausrichtung wenigstens eines Sensors zur Überwachung des Verkehrs an einem Verkehrsweg bereitzustellen, dass einfach, schnell und verlässlich durchführbar ist.

Die Erfindung löst die gestellte Aufgabe durch ein gattungsgemäßes Verfahren, dass die folgenden Schritte aufweist:
a) Bereitstellen von Informationen zur Identifizierung des zu überwachenden Verkehrsweges in einer Datenverarbeitungseinrichtung,
b) Identifizieren des Verkehrswegs durch Verarbeitung der Informationen in der Datenverarbeitungseinrichtung, wobei eine Datenbankabfrage durchgeführt wird, durch die die zur Identifizierung des Verkehrsweges benötigten Daten und Informationen aus den bereitgestellten Informationen extrahiert werden,
c) Abfragen und Bereitstellen von Daten zu dem zu überwachenden Verkehrsweg durch Zugreifen der Datenverarbeitungseinrichtung auf eine Datenbank, wobei die Daten Informationen über die Anzahl von Fahrspuren und/oder den Verlauf von wenigstens einer Fahrspur beinhalten und zudem beinhalten, an welchen Stellen Sensoren positionierbar sind,
d) Ermitteln wenigstens einer möglichen Soll-Position und/oder Soll-Ausrichtung mit Hilfe der bereitgestellten Daten, wobei ein Erfassungsbereich eines Sensors bestimmt wird, in dem der Sensor den Verkehr an dem Verkehrsweg überwachen kann, wenn er in der Soll-Position und/oder Soll-Ausrichtung angeordnet ist.

Ein derartiges Verfahren hat gegenüber dem bisher aus dem Stand der Technik bekannten Verfahren eine Vielzahl von Vorteilen. Der Benutzer, der eine optimale Soll-Position und/oder Soll-Ausrichtung wenigstens eines Sensors bestimmen will, muss zunächst Informationen zur Identifizierung des zu überwachenden Verkehrsweges in einer Datenverarbeitungseinrichtung bereitstellen. Vorteilhafterweise umfassen diese Informationen beispielsweise wenigstens einen Namen eines der beteiligten Verkehrswege. Aber auch die Angabe von Geo-Koordinaten (Latitude, Longitude) ist möglich. Auf diese Weise ist es möglich, beispielsweise eine zu überwachende Kreuzung durch die Benennung der beiden sich kreuzenden Straßen eindeutig zu identifizieren. In einer für den Durchführenden des Verfahrens besonders einfachen Ausgestaltung des Verfahren sind in der Datenverarbeitungseinrichtung bereits Luftbilder oder digitale Landkarten hinterlegt, so dass der Benutzer des Verfahrens beispielsweise mit einem Zeigegerät, beispielsweise einer Maus, auf eine bestimmte Stelle einer solchen grafisch angezeigten Landkarte oder eines dargestellten Luftbildes klickt. Im Datenspeicher der Datenverarbeitungseinrichtung sind vorteilhafterweise die einzelnen Geo-Koordinaten unterschiedlicher Punkte, die auf dem Luftbild oder der digitalen Karte dargestellt sind, hinterlegt, so dass auf diese Weise die Informationen zur Identifizierung des zu überwachenden Verkehrsweges bereitgestellt werden können.

Die Identifizierung des Verkehrsweges aus den eingegebenen Informationen erfolgt durch eine Verarbeitung der Informationen in der Datenverarbeitungseinrichtung. Dabei wird eine Datenbankabfrage durchgeführt, durch die die zur Identifizierung des Verkehrsweges benötigen Daten und Informationen aus den eingegebenen Informationen extrahiert werden. Dies kann lokal in der Datenverarbeitungseinrichtung oder durch Zugriff auf eine externe Datenbank oder ein Datenverarbeitungsprogramm geschehen. Wie die Bearbeitung der eingegebenen Informationen im Detail abläuft hängt im großen Maße von den Informationen und Datenformaten ab, die die Datenbank, auf die im zweiten Verfahrensschritt zugegriffen wird, benötigt.

Ist der zu überwachende Verkehrsweg in der Datenverarbeitungseinrichtung eindeutig identifiziert, wird von der Datenverarbeitungseinrichtung auf eine Datenbank zugegriffen. Diese Datenbank kann sich in einem lokalen Datenspeicher der Datenverarbeitungseinrichtung oder beispielsweise in einem Netzwerk, beispielsweise dem World Wide Web befinden. In der Datenbank sind insbesondere Positionsdaten und Verkehrsführungsdaten über den zu überwachenden Verkehrsweg hinterlegt. Diese werden aufgrund der Abfrage der Datenverarbeitungseinrichtung zur weiteren Bearbeitung bereitgestellt.

Nach gegebenenfalls notwendigen Aufbereitungen und Bearbeitungen der so bereitgestellten Daten aus der Datenbank wird mit Hilfe dieser bereitgestellten Daten wenigstens eine mögliche Soll-Position und/oder Soll-Ausrichtung ermittelt.

Der Benutzer des Verfahrens muss folglich nicht mehr, wie dies im Stand der Technik üblich war, von Hand Fahrspuren und sonstige lokalen Gegebenheiten des zu überwachenden Verkehrsweges in die Datenverarbeitungseinrichtung eingeben. Stattdessen muss lediglich der zu überwachende Verkehrsweg identifiziert werden, so dass die Datenverarbeitungseinrichtung selbst die benötigten Verkehrsdaten aus der Datenbank abrufen kann. Dadurch wird das Verfahren einerseits stark beschleunigt und andererseits die Genauigkeit erhöht und die Fehleranfälligkeit reduziert. Insbesondere für den Fall, dass der Benutzer des Verfahrens den zu überwachenden Verkehrsweg nicht aus persönlicher Anschauung kennt, werden die damit verbundenen Unsicherheiten beim Eintragen beispielsweise von Fahrtrichtungen per Hand dadurch reduziert oder ganz behoben, dass in der Datenbank beispielsweise überwachte und kontrollierte Daten enthalten sind.

Dadurch wird die Fehleranfälligkeit reduziert und somit die Verkehrssicherheit erhöht.

Mit Hilfe der bereitgestellten Daten kann die mögliche Soll-Position und/oder Soll-Ausrichtung auf unterschiedlichste Weise ermittelt werden. Eine Möglichkeit besteht darin, die bereitgestellten Daten graphisch anzuzeigen und von Hand die gewünschten Positionen gegebenenfalls mit zu erreichenden Strahlkeulen der einzelnen Sender und/oder Empfänger zu ermitteln. Natürlich ist es auch möglich, auch diesen Verfahrensschritt beispielsweise durch einen Computer durchführen zu lassen. Dafür können Bedingungen formuliert werden, die die Soll-Position und/oder die Soll-Ausrichtung des jeweiligen Sensors erfüllen muss. Dies kann eine minimale und/oder maximale Größe und/oder Länge des zu überwachenden Bereiches, eine minimale Anzahl von Sensoren oder sonstige Bedingungen sein. Der Computer kann aus ihm zur Verfügung gestellten Daten über mögliche Positionen und/oder Ausrichtungen eines Sensors sowie gegebenenfalls aus Informationen über technische Daten und Strahlkeulenformen des Sensors die gewünschten Soll-Positionen und/oder Soll-Ausrichtungen ermitteln. Es sei jedoch ausdrücklich betont, dass dies lediglich eine vorteilhafte Ausgestaltung, nicht jedoch eine Notwendigkeit für die Durchführung des Verfahrens ist. Auch die Ermittlung der Soll-Position und/oder Soll-Ausrichtung per Hand ist ausdrücklich bei einem erfindungsgemäßen Verfahren eingeschlossen.

Ein Sensor, dessen Soll-Position und/oder Soll-Orientierung mit einem hier beschriebenen Verfahren bestimmt werden soll, kann dabei in unterschiedlichster Form ausgebildet werden. Es sind sogenannte "Stand alone"- Sensoren bekannt, die neben einem Sender und einem Empfänger für Sendestrahlung, die beispielsweise Radarstrahlung sein kann, auch eine elektronische Datenverarbeitung beinhalten, und die vom Sensor ermittelten Daten weiterverarbeiten. Alternativ oder zusätzlich können auch Sensoren verwendet werden, die beispielsweise lediglich in der Lage sind, Fahrzeuge oder andere Verkehrsteilnehmen zu detektieren, die gewonnenen Daten jedoch nicht weiter zu verarbeiten. Typischerweise umfasst beispielsweise die Verkehrsüberwachung an einer Kreuzung eine Mehrzahl von derartigen Sensorköpfen, die mit einer zentralen Datenverarbeitungseinrichtung kommunizieren. Die Sensorköpfe, deren Sollposition und/oder Sollausrichtung mit dem hier beschriebenen Verfahren bestimmt werden können, sammeln Daten über Verkehrsteilnehmer und senden diese an ein Kreuzungssteuergerät, das die Zentrale bildet, weiter. Die hier beschriebenen Verfahren sind auf keine bestimmte Sensorform oder Funktionsweise der einzelnen Sensoren beschränkt. Es ist möglich, die Datenverarbeitung vollständig im Sensor oder vollständig in der zentralen Datenverarbeitungseinrichtung vorzunehmen. Es besteht jedoch auch die Möglichkeit, nur einen Teil der für die Datenverarbeitung benötigten Algorithmen im Sensor beziehungsweise im Sensorkopf ablaufen zu lassen, wobei die so bereits vorbearbeiteten Daten anschließend an ein zentrales Datenverarbeitungsgerät, beispielsweise ein sogenanntes TMIB ("Traffic Management Interface Board"), weitergeleitet werden. Hier kann den unterschiedlichen Anforderungen der verschiedenen Algorithmen Rechnung getragen werden. Algorithmen, die mit einer relativ kleinen Datenmenge auf einem relativ leistungsschwachen Chip ausgeführt werden können, können beispielsweise im Sensor oder im Sensorkopf durchgeführt werden, während Algorithmen, die große Datenmengen, beispielsweise in Echtzeit, verarbeiten müssen oder einen großen Arbeitsspeicher benötigen, vorteilhafterweise in der zentralen Datenverarbeitungseinrichtung ausgeführt werden. Unabhängig davon, welche Sensorvariante gewählt wird, kann die Soll-Position und/oder die Soll-Ausrichtung mit dem hier beschriebenen Verfahren bestimmt werden.

In einer bevorzugten Ausgestaltung wird anschließend die wenigstens eine Soll-Position und/oder Soll-Ausrichtung, die mit dem beschriebenen Verfahren ermittelt wurde, auf einem Display oder einer sonstigen Anzeigeeinrichtung angezeigt. Dies geschieht besonders bevorzugt anhand eines Luftbildes oder einer Landkarte des zu überwachenden Verkehrsweges, bei dem die Soll-Position des wenigstens einen Sensors eingezeichnet ist. Besonders bevorzugt kann auch ein Überwachungsbereich, in dem der Sensor den Verkehr überwachen kann, mit angezeigt werden, so dass der Benutzer des Verfahrens leicht und eindeutig überprüfen kann, ob der für ihn interessante Bereich des Verkehrsweges durch den wenigstens einen Sensor in der möglichen Soll-Position und/oder der Soll-Ausrichtung überwacht werden kann.

In den aus der Datenbank bereitgestellten Daten befinden sich Informationen über einen Aufbau des Verkehrsweges, beispielsweise Fahrspuren des Verkehrsweges, insbesondere deren Anzahl und die jeweilige Hauptfahrtrichtung, Haltelinien, Fußgängerüberwege und/oder Abbiegespuren. Diese umfassen dabei insbesondere die Position der Elemente des Verkehrsweges, die den Aufbau bilden. Alternativ oder zusätzlich dazu sind in den bereitgestellten Daten Informationen über den Verlauf von wenigstens einer der Fahrspuren des Verkehrsweges und beispielsweise deren Breite enthalten. Alle diese Informationen können verwendet werden, um die möglichst optimale Soll-Position und/oder Soll-Ausrichtung des wenigstens einen Sensors zu erreichen. Dies kann beispielsweise dadurch geschehen, dass Randbedingungen definiert werden, aus denen beispielsweise hervorgeht, welcher Bereich des Verkehrsweges woraufhin überwacht werden soll. Ist es beispielsweise lediglich interessant, die Anzahl von Lastkraftwagen auf einer Fahrspur statistisch zu erfassen, ist gegebenenfalls eine andere Positionierung und Ausrichtung des wenigstens einen Sensors erforderlich, als wenn beispielsweise eine Kreuzung zweier Fahrradwege überwacht werden soll. Ein Fahrradfahrer hat eine deutlich andere Reflektionssignatur der ausgestrahlten Sendestrahlung als dies beispielsweise ein Lastkraftwagen hat. Dies hat selbstverständlich Einfluss auf die optimale Position und Ausrichtung des Sensors sowie gegebenenfalls auch auf die Art des gewählten Sensors.

Daher ist es von Vorteil, wenn in die Datenverarbeitungseinrichtung zusätzlich zu den Informationen über den zu überwachenden Verkehrsweg auch Informationen über den zu verwendenden Sensor beispielsweise Sende- und Empfangsstrahlkeule, maximale Reichweite und sonstige interessante Informationen eingegeben werden.

Vorzugsweise befinden sich in den aus der Datenbank abgerufenen und bereitgestellten Daten zudem Informationen über die baulichen Gegebenheiten auf, an und um den zu überwachenden Verkehrsweg. Dies können beispielsweise Häuser und Gebäude aber auch Beleuchtungs- oder Ampelmasten, Elektrifizierungsmasten beispielsweise für Straßenbahnen oder Verkehrsschilder sein. Je detaillierter die aus der Datenbank bereitgestellten Daten über diese baulichen Gegebenheiten entlang und um den Verkehrsweg Auskunft geben, desto besser kann eine optimale Soll-Position und/oder Soll-Ausrichtung des wenigstens einen Sensors ermittelt werden. Es ist daher nicht mehr nötig, beispielsweise durch eine Begehung einer Verkehrskreuzung zu ermitteln, an welchen Positionen überhaupt Sensoren positioniert werden können, da diese Informationen nun einfach aus der Datenbank heruntergeladen werden können.

Vorteilhafterweise wird folglich zum Ermitteln der wenigstens einen Soll-Position und/oder Soll-Ausrichtung ein Erfassungsbereich des wenigstens einen Sensors bestimmt, in dem der Sensor den Verkehr an dem Verkehrsweg überwachen kann, wenn er in der Soll-Position und/oder Soll-Ausrichtung angeordnet ist. Dies kann gegebenenfalls in einem Iterationsverfahren ermittelt werden, bei dem zunächst eine Versuchsposition und/oder Versuchsausrichtung des Sensors angenommen wird, und anschließend ein Erfassungsbereich bestimmt wird, der für den vorbestimmten Sensor in dieser Versuchsposition und Versuchsausrichtung ermittelt werden kann. Werden die gegebenenfalls vorgegebenen Randbedingungen damit nicht erreicht, wird anhand von aus dem Stand der Technik prinzipiell bekannten Routinen die Versuchsposition und/oder Versuchsausrichtung verändert und der Erfassungsbereich neu bestimmt. Dies geschieht iterativ so oft, bis alle vorgegebenen Randbedingungen für die optimale Soll-Position und/oder Soll-Ausrichtung erfüllt sind. Natürlich kann eine derartige Optimierung auch im Bezug auf weitere Parameter, beispielsweise die Art des zu wählenden Sensors, dessen Sende- oder Empfangskeule oder die Art der ausgestrahlten Sendestrahlen erfolgen.

Vorteilhafterweise beinhaltet eine Soll-Ausrichtung einen Soll-Elevationswinkel und einen Soll-Azimutwinkel, wobei der Elevationswinkel einen Neigungswinkel beispielsweise zur Horizontalen oder, sofern bekannt, zur Richtung des Verlaufs des Verkehrsweges angibt, während der Azimutwinkel beispielsweise einen Winkel zu einer bestimmten Himmelsrichtung, beispielsweise nach Norden, angibt.

Vorteilhafterweise werden eine Mehrzahl von Soll-Positionen und/oder Soll-Ausrichtungen für eine Mehrzahl von Sensoren bestimmt. Auf diese Weise können auch große Kreuzungen und andere große Verkehrswege den anzugebenden Nebenbedingungen entsprechend in optimaler Weise überwacht werden. Das iterative Vorgehen kann dabei entweder für jeden Sensor einzeln und nacheinander erfolgen oder für den gesamten zu überwachenden Verkehrsweg gleichzeitig. In diesem Fall kann beispielsweise auch die Anzahl der verwendeten Sensoren optimiert und als Variationsparameter verwendet werden.

Die Erfindung löst die gestellte Aufgabe zudem durch ein Verfahren zum Einrichten eines Sensors zur Überwachung des Verkehrs an einem Verkehrsweg, wobei der Sensor einen Datenspeicher aufweist oder auf einen Datenspeicher zugreifen kann, dass sich dadurch auszeichnet, dass nach dem Durchführen eines hier beschriebenen Verfahrens Informationen über Verkehrsweg, Soll-Position und/oder Soll-Ausrichtung im Datenspeicher des Sensors hinterlegt werden. Auf diese Weise kann eine elektrische Steuerung des Sensors auf alle wichtigen Daten, wie beispielsweise Verlauf, Breite und Anzahl der Fahrspuren, bevorzugte Fahrtrichtung und Position und Ausrichtung des Sensors relativ zu diesen Fahrspuren aus dem Datenspeicher zugreifen. Da die benötigten Informationen aus den Daten extrahiert wurden, die aus der Datenbank abgefragt wurden, kann dieses Verfahren schnell, einfach, kostengünstig und dennoch verlässlich durchgeführt werden. Eine Begehung des Verkehrsweges oder eine Übertragung der Daten von Hand ist nicht mehr nötig.

Vorteilhafterweise enthalten daher die abgespeicherten Informationen Daten über den Verlauf und/oder die Anzahl und/oder die Hauptfahrtrichtung wenigstens einer Fahrspur des zu überwachenden Verkehrsweges.

Eine mögliche Datenbank, die für das Verfahren gemäß den Ausführungsbeispielen der vorliegenden Erfindung geeignet ist, ist die sogenannte "OSM"-Datenbank (OSM "Open street map"). Diese ist beispielsweise im Internet frei zugänglich verfügbar, wodurch das Verfahren weiter vereinfacht, die Verfahrenskosten gesenkt und die Verfügbarkeit des Verfahrens quasi weltweit gegeben ist. Aber auch andere Datenbanken, wie beispielsweise "Nokia maps", "Google maps" oder "Microsoft maps" können verwendet werden. Von Vorteil ist es dementsprechend, wenn die im Verfahrensschritt b) bereitgestellten Daten in diesem Standard-Datenformat vorliegend und entsprechend einfach weiterverarbeitet werden können.

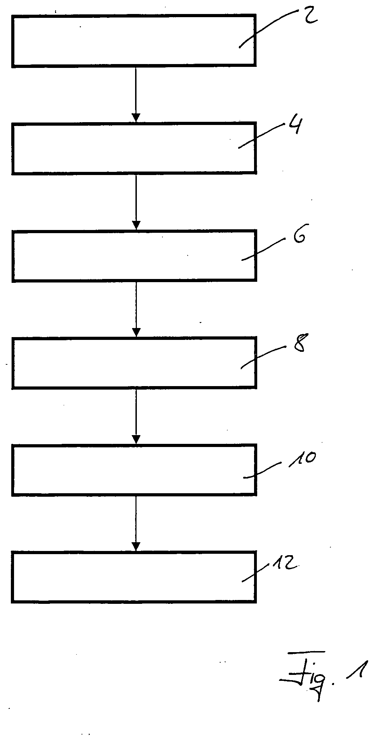

Mit Hilfe der beiliegenden Zeichnung wird nachfolgend ein Ausführungsbeispiel der vorliegenden Erfindung näher erläutert. Dabei zeigt
- Figur 1 -: ein schematisches Ablaufdiagramm des verfahrensgemäß am ersten Ausführungsbeispiel der vorliegenden Erfindung.

Zunächst erfolgt die Identifizierung 2 des zu überwachenden Verkehrsweges. Dabei werden im ersten Verfahrensschritt Informationen der Datenverarbeitungseinrichtung bereitgestellt, aus denen der zu überwachende Verkehrsweg oder der Teil des überwachenden Verkehrsweges eindeutig identifiziert werden kann. Die Informationen über den so identifizierten Verkehrsweg werden anschließend an eine Datenbank 4 übermittelt, aus der Informationen über die zu überwachenden Verkehrswege oder den zu überwachenden Verkehrsweg abgefragt und bereitgestellt werden. Diese Daten werden im nächsten Verfahrenschritt einer Filterungen und Aufbereitungen 6 unterzogen. Dies ist beispielsweise bei der Verwendung der "Open street map"-Datenbank nötig, weil die Daten nicht im gewünschten Format vorliegen.

Anschließend erfolgt das Ermitteln 8 einer möglichen Soll-Position und/oder Soll-Ausrichtung. In diesem Verfahrensschritt könne eine Vielzahl einzelner Verfahrensschritte enthalten sein. So können iterative Verfahren verwendet werden, um die optimale Soll-Position und Soll-Ausrichtung für die optimale Anzahl der benötigten Sensoren aufzufinden. Dabei werden insbesondere eingegebene und vorgegebene Randbedingungen als Kriterien verwendet, da diese eingehalten werden müssen.

Anschließend erfolgt eine Visualisierung 10 der wenigstens einen Soll-Position und/oder Soll-Ausrichtung beispielsweise auf einem Display oder einer anderen Anzeigeeinrichtung. Dies kann beispielsweise dadurch erfolgen, dass ermittelte Erfassungsbereiche einem Luftbild oder einer Landkarte überlagert angezeigt werden. Der Nutzer kann auf diese Weise besonders einfach erkennen, welcher Bereich des Verkehrsweges durch welchen der gegebenenfalls mehreren Sensoren überwacht wird und ob alle Randbedingungen, die für den Nutzer von Interesse sind, eingehalten und erfüllt werden. Anschließend erfolgt ein Abspeichern 12 der Daten und Informationen über Soll-Position und Soll-Ausrichtung und der benötigten Informationen über den zu überwachenden Teil des Verkehrsweges in einem Datenspeichers des Sensors. Damit ist der Sensor mit allen Informationen ausgestattet, die benötigt werden, um die volle Funktions- und Leistungsfähigkeit des Sensors zu gewährleisten.

### Bezugszeichenliste

- 2: Identifizierung
- 4: Datenbank
- 6: Filterung und Aufbereitung
- 8: Ermitteln
- 10: Visualisierung
- 12: Abspeichern

## Patentansprüche

1. Verfahren zum Bestimmen einer Soll-Position und/oder einer Soll-Ausrichtung wenigstens eines Sensors zur Überwachung des Verkehrs an einem Verkehrsweg, wobei das Verfahren die folgenden Schritte aufweist:
a) Bereitstellen von Informationen zur Identifizierung (2) des zu überwachenden Verkehrsweges in einer Datenverarbeitungseinrichtung,
b) Identifizieren des Verkehrswegs durch Verarbeitung der Informationen in der Datenverarbeitungseinrichtung, wobei eine Datenbankabfrage durchgeführt wird, durch die die zur Identifizierung des Verkehrsweges benötigten Daten und Informationen aus den bereitgestellten Informationen extrahiert werden,
c) Abfragen und Bereitstellen von Daten zu dem zu überwachenden Verkehrsweg durch Zugreifen der Datenverarbeitungseinrichtung auf eine Datenbank (4), wobei die Daten Informationen über die Anzahl von Fahrspuren und/oder den Verlauf von wenigstens einer Fahrspur beinhalten und zudem beinhalten, an welchen Stellen Sensoren positionierbar sind,
d) Ermitteln (8) wenigstens einer möglichen Soll-Position und/oder Soll-Ausrichtung mit Hilfe der bereitgestellten Daten, wobei ein Erfassungsbereich eines Sensors bestimmt wird, in dem der Sensor den Verkehr an dem Verkehrsweg überwachen kann, wenn er in der Soll-Position und/oder Soll-Ausrichtung angeordnet ist.

2. Verfahren nach Anspruch 1, **dadurch gekennzeichnet, dass** die Informationen wenigstens einen Namen eines Verkehrsweges enthalten.

3. Verfahren nach einem der vorstehenden Ansprüche, **dadurch gekennzeichnet, dass** die ermittelte wenigstens eine Soll-Position und/oder Soll-Ausrichtung auf einen Display angezeigt wird.

4. Verfahren nach einem der vorstehenden Ansprüche, **dadurch gekennzeichnet, dass** die bereitgestellten Daten Informationen über einen Aufbau des Verkehrsweges, beispielsweise Fahrspuren des Verkehrsweges, insbesondere Hauptfahrtrichtung, Haltelinien, Fußgängerüberwege und/oder Abbiegespuren enthalten.

5. Verfahren nach einem der vorstehenden Ansprüche, **dadurch gekennzeichnet, dass** die bereitgestellten Daten Informationen über den Verlauf wenigstens einer Fahrspur des Verkehrsweges enthalten.

6. Verfahren nach einem der vorstehenden Ansprüche, **dadurch gekennzeichnet, dass** eine Mehrzahl von Soll-Positionen und/oder Soll-Ausrichtungen für eine Mehrzahl von Sensoren bestimmt werden.

7. Verfahren zum Einrichten eines Sensors zur Überwachung des Verkehrs an einem Verkehrsweg, wobei der Sensor einen Datenspeicher aufweist oder auf einen Datenspeicher zugreifen kann, **dadurch gekennzeichnet, dass** nach dem Durchführen des Verfahrens nach einem der vorstehenden Ansprüche Informationen über den Verkehrsweg, die Soll-Position und/oder die Soll-Ausrichtung im Datenspeicher abgespeichert werden.

8. Verfahren nach Anspruch 7, **dadurch gekennzeichnet, dass** die abgespeicherten Informationen Daten über Verlauf und/oder Anzahl und/oder Hauptfahrtrichtung wenigstens einer Fahrspur des Verkehrsweges enthalten.

## Claims

1. A method for determining an intended position and/or an intended alignment of at least one sensor for monitoring the traffic on a traffic route, wherein the method comprises the following steps:
a) providing information items for identifying (2) the traffic route to be monitored in a data processing device,
b) identifying the traffic route by processing the information items in the data processing device, wherein a database search is carried out, by means of which the data and information items required for identifying the traffic route are extracted from the provided information items,
c) querying and providing data in relation to the traffic route to be monitored by accessing a database (4) by the data processing device, wherein the data includes information on the number of lanes and/or the course of at least one lane and further includes at which positions sensors can be positioned,
d) ascertaining (8) at least one possible intended position and/or intended alignment with the aid of the provided data, wherein a capture region of a sensor is determined, the sensor being able to monitor the traffic on the traffic route in said capture region if said sensor is arranged in the intended position and/or with the intended alignment.

2. The method as claimed in claim 1, **characterized in that** the information items contain at least one name of a traffic route.

3. The method as claimed in one of the preceding claims, **characterized in that** the ascertained at least one intended position and/or intended alignment is depicted on a display.

4. The method as claimed in one of the preceding claims, **characterized in that** the provided data contain information items about a structure of the traffic route, for example lanes of the traffic route, in particular number and main driving direction, stop lines, pedestrian crossings and/or turning lanes.

5. The method as claimed in one of the preceding claims, **characterized in that** the provided data contain information items about the course of at least one lane of the traffic route.

6. The method as claimed in one of the preceding claims, **characterized in that** a plurality of intended positions and/or intended alignments are determined for a plurality of sensors.

7. A method for configuring a sensor for monitoring the traffic on a traffic route, wherein the sensor comprises a data memory or has access to a data memory, **characterized in that** information items about the traffic route, the intended position and/or the intended alignment are stored in the data memory after carrying out the method as claimed in one of the preceding claims.

8. The method as claimed in claim 7, **characterized in that** the stored information items contain data about the course and/or number and/or main driving direction of at least one lane of the traffic route.

## Revendications

1. Procédé pour définir une position de consigne et/ou une orientation de consigne d'au moins un capteur destiné à surveiller le trafic sur un trajet de circulation, le procédé comprenant les étapes suivantes consistant à :
a) fournir des informations, destinées à identifier (2) le trajet de circulation à surveiller, dans un dispositif de traitement de données,
b) identifier le trajet de circulation en traitant les informations dans le dispositif de traitement de données, en effectuant une interrogation d'une base de données, par laquelle les données et les informations nécessaires pour identifier le trajet de circulation sont extraites des informations fournies,
c) interroger et fournir des données concernant le trajet de circulation à surveiller par l'accès du dispositif de traitement de données à une base de données (4), les données contenant des informations sur le nombre de voies de circulation et/ou sur le tracé d'au moins une voie de circulation et contenant en outre des informations sur les endroits où des capteurs peuvent être positionnés,
d) déterminer (8) au moins une position de consigne et/ou une orientation de consigne possibles à l'aide des données fournies, en définissant une zone de détection d'un capteur dans laquelle le capteur peut surveiller le trafic sur le trajet de circulation lorsqu'il est placé dans la position de consigne et/ou dans l'orientation de consigne.

2. Procédé selon la revendication 1,
**caractérisé en ce que** les informations contiennent au moins un nom d'un trajet de circulation.

3. Procédé selon l'une des revendications précédentes,
**caractérisé en ce que** ladite au moins une position de consigne et/ou orientation de consigne déterminée est affichée sur un écran d'affichage.

4. Procédé selon l'une des revendications précédentes,
**caractérisé en ce que** les données fournies contiennent des informations sur une structure du trajet de circulation, par exemple sur des voies de circulation du trajet de circulation, en particulier sur la direction principale de circulation, des lignes d'arrêt, des passages pour piétons et/ou des voies de changement de direction.

5. Procédé selon l'une des revendications précédentes,
**caractérisé en ce que** les données fournies contiennent des informations sur le tracé d'au moins une voie de circulation du trajet de circulation.

6. Procédé selon l'une des revendications précédentes,
**caractérisé en ce qu'**une pluralité de positions de consigne et/ou d'orientations de consigne sont définies pour une pluralité de capteurs.

7. Procédé d'installation d'un capteur destiné à surveiller le trafic sur un trajet de circulation, le capteur comprenant une mémoire de données ou pouvant accéder à une mémoire de données,
**caractérisé en ce qu'**après la mise en oeuvre du procédé selon l'une des revendications précédentes, des informations sur le trajet de circulation, la position de consigne et/ou l'orientation de consigne sont mémorisées dans la mémoire de données.

8. Procédé selon la revendication 7,
**caractérisé en ce que** les informations mémorisées contiennent des données relatives au tracé et/ou au nombre et/ou à la direction principale de circulation d'au moins une voie de circulation du trajet de circulation.
